(19)

Europäisches
Patentamt
European
Patent Office
Office européen
des brevets

(11)  **EP 1 436 980 B1**

(12)                          **EUROPEAN PATENT SPECIFICATION**

(45) Date of publication and mention
    of the grant of the patent:
    **10.04.2013  Bulletin 2013/15**

(51) Int Cl.:
    **H04N 1/58** (2006.01)

(21) Application number: **01974560.3**

(22) Date of filing: **02.10.2001**

(86) International application number:
    **PCT/IB2001/001796**

(87) International publication number:
    **WO 2003/051035 (19.06.2003 Gazette 2003/25)**

(54) **REDUCTION OF CHROMATIC BLEEDING ARTIFACTS IN IMAGES**

VERRINGERUNG VON FARBVERLAUFSARTEFAKTEN IN BILDERN

REDUCTION D'ARTEFACTS DE DIFFUSION CHROMATIQUES DANS DES IMAGES

(84) Designated Contracting States:
    **DE FR GB**

(43) Date of publication of application:
    **14.07.2004  Bulletin 2004/29**

(73) Proprietor: **Hewlett-Packard Company**
    **Palo Alto, CA 94304-1112 (US)**

(72) Inventor: **MAURER, Ron, P.**
    **33314 Haifa (IL)**

(74) Representative: **Jehan, Robert et al**
    **Williams Powell**
    **Staple Court**
    **11 Staple Inn Buildings**
    **London, WC1V 7QH (GB)**

(56) References cited:
    **EP-A- 0 929 189    US-A- 6 031 581**

• **HASKELL B G ET AL: "IMAGE AND VIDEO CODING - EMERGING STANDARDS AND BEYOND" IEEE TRANSACTIONS ON CIRCUITS AND SYSTEMS FOR VIDEO TECHNOLOGY, IEEE INC. NEW YORK, US, vol. 8, no. 7, 1 November 1998 (1998-11-01), pages 814-836, XP000790129 ISSN: 1051-8215**
• **YUEN M ET AL: "A survey of hybrid MC/ DPCM/DCT video coding distortions" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 70, no. 3, 30 November 1998 (1998-11-30), pages 247-278, XP004144969 ISSN: 0165-1684**

## Description

BACKGROUND OF THE INVENTION

The present invention relates to digital images. More specifically, the present invention relates to the reconstruction of compressed images.

Image compression according to JPEG and certain other image compression algorithms is performed by converting images to luminance and chrominance channels and subsampling the chrominance channels (Cb and Cr) by an integer factor (usually 2 or 4). The luminance and subsampled chrominance channels are then compressed by a compression module suitable for grayscale image. The chrominance channels may be subsampled because the human visual system (HVS) has a reduced spatial sensitivity of chromatic sensation relative to luminance sensation by roughly a factor of two. Consequently, chromatic bleeding artifacts resulting from the sub-sampling are virtually unnoticeable in most color photographs that contain subsampled chrominance values.

However, chromatic bleeding artifacts are noticeable in color compound document images, which frequently contain sharp edges between different colors. For example, a color compound document might have text or other computer-generated shapes that are overlaid on regions having uniform color. The sharp edges occur at the transitions of the computer-generated images and the photographs.

The chromatic bleeding artifacts are noticeable if the reconstructed chrominance-channels are interpolated back to their original resolution by a simple technique such as linear interpolation. The chromatic bleeding artifacts are seen at boundaries between regions with saturated colors and white regions (or regions with bright colors). In document images, these boundaries are often between a white or bright background and color characters, lines and patches.

The chromatic bleeding artifacts are also noticeable in regions containing inverted text (e. g., white characters on a colored background). Due to the properties of the human visual system, the chromatic bleeding artifacts are visible on the brighter side of the edge.

The chromatic bleeding artifacts reduce image quality. Therefore, it would be desirable to reduce the chromatic bleeding artifacts, especially in color compound document images.

US 6,031,581 discloses an image data modification technique to address certain image defects characteristic of still images derived from original video sources, such as television or videotape. Color bleeding, caused by an inability of chrominance signals to change from pixel to pixel as quickly as luminance signals, is addressed by modifying chrominance values of pixels, in particular by processing the chrominance signal to have slopes closer to a change in the luminance signal for the same small area of the image. The modification can take into account minimal and maximum values of a neighbourhood of a pixel.

EP 0929189 discloses a method for making continuous-tone, raster color images that are less susceptible to the effects of misregistration. For each pixel the method determines the component-wise maximum positive color difference for the pixel from its neighbors. A fraction of this difference is then determined and then added to each pixel's color value, thus eliminating annoying white space between color transitioning in pixels. The particular fractional value is a function of the pixel's luminance.

Yuen M et al.: "A survey of hybrid MC/DPCM/DCT video coding distortions" Signal Processing. European Journal Devoted to the Methods and Applications of Signal Processing Elsevier Science Publishers B.V. Amsterdam, NL, vol. 70, no. 3, 30 November 1998-11-30), pages 247-278, XP004144969 ISSN: 0165-1684 discusses video coding distortions. The motion-compensated hybrid DCT/DPCM algorithm has been successfully adopted in various video coding standards, such as H.261, H.263, MPEG-1 and MPEG-2. However, its robustness is challenged in the face of an inadequate bit allocation, either globally for the whole video sequence, or locally as a result of an inappropriate distribution of the available bits. In either of these situations, the trade-off between quality and the availability of bits results in a deterioration in the quality of the decoded video sequence, both in terms of the loss of information and the introduction of coding artifacts. These distortions are an important factor in the fields of filtering, codec design, and the search for objective psychovisual-based quality metrics; therefore, this paper presents a comprehensive analysis and classification of the numerous coding artifacts which are introduced into the reconstructed video sequence through the use of the hybrid MC/DPCM/DCT video coding algorithm. Artifacts which have already been briefly described in the literature, such as the blocking effect, ringing, the mosquito effect, MC mismatch, blurring, and color bleeding, will be comprehensively analyzed. Additionally, artifacts with unique properties which have not been previously identified in the literature are presented.

## SUMMARY OF THE INVENTION

According to the present invention, there is provided a method at claim 1 and an apparatus at claim 8.

According to the present invention, chromatic bleeding artifacts in a digital image are reduced by modifying chrominance values of at least some pixels in the digital image. The pixels are modified according to luminance values and chromatic dynamic range.

Other aspects and advantages of the present invention will become apparent from the following detailed description, taken in conjunction with the accompanying drawings, illustrating by way of example the principles of the present invention.

## BRIEF DESCRIPTION OF THE DRAWINGS

Figure 1 is an illustration of a method of reconstructing an image and reducing chromatic bleeding artifacts in the reconstructed image;

Figure 2 is an illustration of a local neighborhood of pixels;

Figures 3(a) to 3(d) are illustrations of a sliding window for determining chromatic dynamic ranges of pixels in a reconstructed image that has been interpolated by pixel replication; and

Figure 4 is an illustration of a hardware implementation of the method of Figure 1.

## DETAILED DESCRIPTION OF THE INVENTION

As shown in the drawings for purposes of illustration, the present invention is embodied in a method and apparatus for reducing chromatic bleeding artifacts in digital images containing subsampled chrominance values. The method and apparatus are particularly suited for reducing chromatic bleeding artifacts in color compound document images containing both natural and computer-generated features. Natural features in photo regions tend to have mild luminance or chrominance transitions. Computer-generated features such as text regions tend to have sharp edges and sharp luminance or chrominance transitions. The method and apparatus reduce the chromatic bleeding artifacts that occur at the sharp edges.

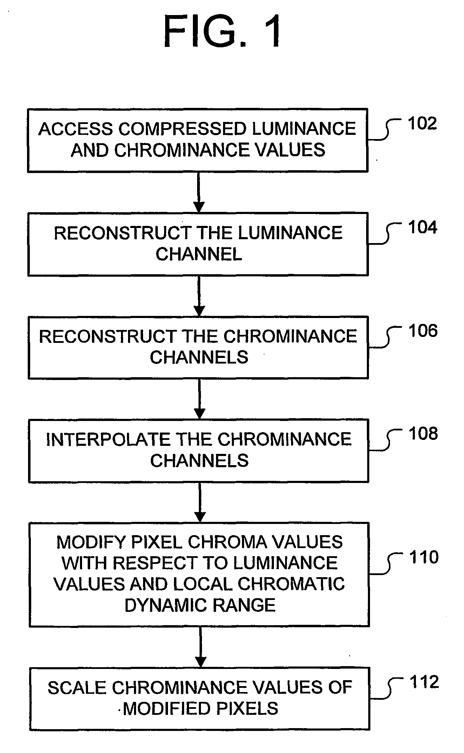

Reference is made to Figure 1, which illustrates a method of reconstructing a compressed image and reducing chromatic bleeding artifacts in the reconstructed image. The compressed image includes a first stream of compressed luminance (Y) values and second and third streams of compressed chrominance (Cb and Cr) values. Prior to compression, the chrominance channels were either subsampled or low-pass filtered and then subsampled.

The image reconstruction begins by accessing the first, second and third streams of compressed values (block 102). The luminance values (Y) are reconstructed from the first stream (block 104) and the chrominance values (Cb and Cr) are reconstructed from the second and third streams (block 106).

The luminance and chrominance values will hereinafter be described with respect to normalized values. For the luminance values, $0 \leq Y \leq 1$. For the chrominance values, $-0.5 \leq Cb \leq 0.5$ and $-0.5 \leq Cr \leq -0.5$. The point Cb=Cr=0 corresponds to the gray-axis (no color).

Since the chrominance values (Cb and Cr) were subsampled during compression, the reconstructed chrominance channels are interpolated or upsampled to their original resolution to match the resolution of the luminance channel (block 108). A simple interpolation method is pixel replication, where every low-resolution pixel is replaced by a 2x2 block of high-resolution pixels having the same chrominance values (Cb and Cr). A more sophisticated upsampling method involves applying low-pass filtering on the pixel-replicated chrominance channels for reducing aliasing artifacts in locations of high spatial frequency, such as edges.

Chromatic bleeding artifacts in the reconstructed digital image are reduced by modifying chroma values of at least some of the pixels in the digital image. The chroma value of a pixel is modified with respect to the pixel's luminance value and local chromatic dynamic range (block 110); and the chrominance values (Cb and Cr) are scaled according to the change in chroma value (block 112). Modifying the chroma value with respect to chromatic dynamic range is performed so as not to reduce chromaticity too much in regions with essentially uniform light colors.

The reconstructed luminance and chrominance channels may be converted back to RGB space at the original resolution. The reconstructed image may then be displayed (e.g., printed).

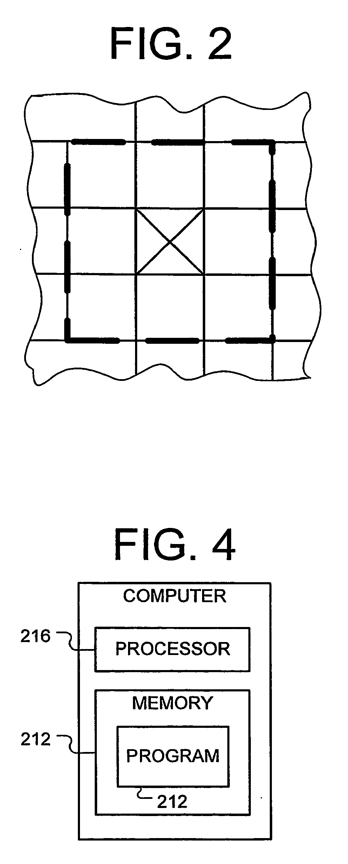

The local chromatic dynamic range of a pixel is determined with respect to its local pixel neighborhood. Figure 2 provides an example of a neighborhood of pixels. The neighborhood, delineated by a window indicated in dashed lines, includes a 3x3 array of pixels. The pixel of interest, marked by an "X," lies at the center of the neighborhood.

The chromatic dynamic range for each pixel of interest may be computed as the difference between minimum and maximum chroma values of the pixels in the local neighborhood. The chroma value (C) of a pixel may be computed as $C = \sqrt{C_b^2 + C_r^2}$ or the chroma value (C) may be approximated by $C \approx |C_b| + |C_r|$ where the allowed value range for each of the chrominance values is [-0.5,0.5]. The chromatic dynamic range of a neighborhood may be computed as $D = C_M - C_m$ where $C_m$ represents the minimum chroma value of the neighborhood and $C_M$ represents the maximum chroma value of the neighborhood.

A neighborhood and chromatic dynamic range are determined for each pixel of interest. Consequently, the chromatic dynamic range is determined on a pixel-by-pixel basis.

A new chroma value (C') for a pixel of interest may be computed as $C' = C - f(Y, D) \cdot (C - C_0)$, where C is the original chroma value for the pixel, D is the chromatic dynamic range, $C_0$ is a chromatic modulus having a value between zero and the minimum chroma of the local neighborhood for the pixel, and $f(Y,D)$ is a parametric expression that determines the amount of relative chroma reduction.

The parametric expression $f(Y,D)$ may range between 0 and 1. The parametric expression $f(Y,D)$ complies with the following constraints: (1) $f(Y,D) \rightarrow 1$ for $Y \rightarrow 1$, whereby $C' \rightarrow C_0$; and (2) $f(Y,D) \rightarrow 0$ for $D \rightarrow 0$. If

D→0, then $C' \to C$, whereby the chroma value for the pixel is not modified.

The parametric expression $f(Y,D)$ may also comply with another constraint: $f(Y, D) \to 0$ for $D \to 0$ and $Y \to 1$. Thus, the chromatic dynamic range takes precedence.

If the chroma value is modified, each corresponding chrominance value (Cb and Cr) is scaled by the ratio C'/C. Thus, $Cb' = \dfrac{C'}{C} Cb$ and $Cr' = \dfrac{C'}{C} Cr$. This keeps the hue of the color unchanged.

Consider different cases for the chromatic modulus ($C_0$). In a first case $C_0 = C_m$, whereby $C' = C - f(Y,D) \cdot (C - C_m)$ and the new chroma value (C') lies between the original chroma value (C) and the neighborhood minimum ($C_m$). For high luminance $Y \to 1$, the new chroma value (C') approaches the local minimum ($C_m$). Thus $C' \to C_m$ as $Y \to 1$.

In a second case, $C_0 = \max (C_m\text{-}D, 0)$. Such a modulus $C_0$ allows the new chroma value (C') to fall below the local minimum ($C_m$). However, the chroma value is still dependent upon the chromatic dynamic range (D). The chromatic modulus ($C_0$) is not reduced below $C_m$-D. If $C_m$<D, the chromatic modulus ($C_0$) becomes zero. For chromatic dynamic ranges that are not small, the situation $C_m$<D corresponds to edges between "non-colored" and "saturated color" regions. In this situation, the chroma value may be reduced to zero if the "non-colored" side is close to white. On the other hand, the situation $C_m$ >D could correspond to an edge between a "mild-color" and a "saturated-color" where the visibility of color-bleeding artifacts is not high to start with. In this situation, allowing the chroma value to be reduced to zero would reduce too much color in the lighter side of the edge. Putting a lower bound $C_m$-D on the modified chroma value ensures that in color gradient regions ("mild edges") where the chromatic dynamic range (D) is neither very small or very large, the chroma value will not be reduced significantly when the luminance $Y \to 1$.

In the third case, $C_0 = 0$. For high luminance $Y \to 1$, the new chroma value (C') approaches 0. Thus $C' \to 0$ as $Y \to 1$.

The parametric expression may be expressed in different ways. An exemplary parametric expression is $f(Y,D) = \max\left[1 - \alpha(\dfrac{1-Y}{D}), 0\right]$. The exemplary parametric expression always complies with the two constraints: $f(Y \to 1, D) \to 1$ and $f(Y, D \to 0) \to 0$, regardless of the value of the term $\alpha$ (where $\alpha$ is positive).

For a given value of D, there is a luminance value (Y) below which the chromatic bleeding artifacts are not visible. If a chromatic bleeding artifact is not visible for a given D, the value of the term $\alpha$ may be chosen such that $f(Y,D) = 0$. For example, the chroma value is not modified if $Y < (1\text{-}D/\alpha)$. That is, C'=C if $Y < T_Y(D)$, where threshold $T_Y(D) = (1\text{-}D/\alpha)$.

The term $\alpha$ may be a function of the chromatic dynamic range (D). A term $\alpha$ may be measured for each value of D. Each term $\alpha$ may be measured from subjective tests (e.g., observing visibility of artifacts in patches).

In the alternative, the term $\alpha$ may be constant for all D. The value for the term $\alpha$ can be determined by trial and error. For example, $0.5 \leq \alpha \leq 1$ has been found to work well.

Thus disclosed is a method for reducing the chrominance magnitude in pixels that would generate a visual perception of chromatic bleeding. By taking luminance and local chrominance values into account, the method does not modify patches that have high luminance values and non-negligible chrominance values. A flat region might have relatively high luminance but also non-negligible chrominance. The method would not map such a region to white. A document image might have text boxes with light colored backgrounds. The method would not map the light backgrounds to white.

The method is particularly useful for reducing chromatic bleeding artifacts in compound color documents. However, the method is not so limited.

Although Figure 2 shows a 3x3 square-shaped neighborhood, the method is not limited to such a neighborhood. The neighborhood is not limited to any particular size. The number of pixels is not limited to nine. Although a fixed number of pixels in the neighborhood is preferred for all pixels of interest, the size of the neighborhood may be changed dynamically to accommodate a particular class of image region (e.g., text, graphics, natural features).

The neighborhood is not limited to any particular geometry, although square windows are preferred for performance reasons. For example, the shape of the neighborhood may be diamond-shaped. The minimum/maximum calculations may include the center pixel (that is, a full neighborhood may be used) or the minimum/maximum calculations may exclude the center pixel of interest (that is, a hollow neighborhood may be used).

The method has been described in connection with decomposing a digital image into visually significant channels (e.g., luminance and blue and red chrominance channels). However, the method is not limited to YCbCr color space. For example, the method may be applied in Yuv, Luv or Lab color space (where L represents luminosity).

In the method described above, much of the computational effort is devoted towards computing the chromatic dynamic range for each pixel in a neighborhood. However, the computational effort can be reduced, and the speed of the method increased, by using sub-sampled chrominance values and thus taking advantage of redundancy.

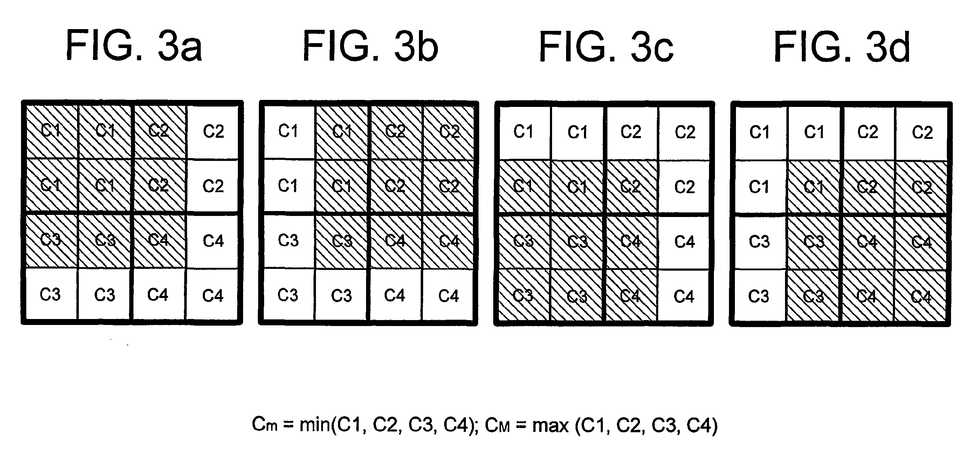

Reference is now made to Figures 3(a) to 3(d), which show a sliding window for determining chromatic dynamic ranges of pixels in a reconstructed image that has been interpolated by pixel replication. During the interpolation, a first pixel in the reconstructed luminance channel is replaced by a 2x2 block of pixels C1, a second pixel in the reconstructed luminance channel is replaced by a 2x2 block of pixels C2, a third pixel in the reconstructed luminance channel is replaced by a 2x2 block of pixels C3, and a fourth pixel in the reconstructed luminance channel is replaced by a 2x2 block of pixels C4.

The pixels in every 2x2 block in the upsampled chrominance channels contain exactly the same chrominance value. As Figures 3(a) to 3(d) show, each 4x4 block in the upsampled chrominance channel which is aligned with 2x2 block boundaries, has four possibilities of accommodating 3x3 neighborhoods. For each of these four possibilities, the neighborhood minium (or maximum), and the chromatic dynamic range of the neighborhoods are the same, since they are calculated from the same four chromatic modulus values. The four chromatic modulus values correspond to the four double-sized pixels, where each such pixel corresponds to a pixel in the subsampled chrominance channels. Thus, the computational complexity is reduced to finding the maximum and minimum in 2x2 neighborhoods in the subsampled chrominance channels. This reduces by a factor of four the number of chrominance modulus calculations, and reduces by a factor of sixteen the number of comparisons needed for calculating the minimum and maximum chroma values $(C_m$ and $C_M)$ of the neighborhoods. If pixel-replication is to be used in this manner, it is preferable to apply low-pass filtering on the chrominance channels prior to their subsampling. For example, every 2x2 block of the original chrominance channels could be replaced by the average or the median of the four chrominance-values in that block.

The computational effort may be reduced in other ways. For example, if the difference between the new chroma value (C') and the original chroma value (C) is imperceptible, little will be gained by modifying the chroma value. Therefore, the parametric expression is not computed and the chroma value is not modified if the difference is imperceptible. For example, $C'=C$ if $(C-C_0) < T$, where T is a predetermined threshold. If the chromatic dynamic range (D) is computed with a fast recursive algorithm, it is calculated for all pixels. Therefore, little overhead is incurred by performing the comparison D<T. An exemplary threshold is T=0.1 (for normalized chrominance values).

The method may be implemented in hardware, software or a combination of the two.

Reference is now made to Figure 4, which illustrates a software implementation of the method. Computer memory 212 stores a program 214 that, when executed, instructs a processor 216 to perform the method described above. The memory 212 and the processor 216 may be part of a personal computer or workstation.

A non-recursive algorithm may be used to determine the minimum and maximum chroma values of pixel neighborhoods. The non-recursive algorithm may be used for all types of neighborhoods. The size of the memory needed to determine the minimum and maximum values is equal to the size of the neighborhood.

A fast recursive algorithm may be used to determine the minimum and maximum chroma values of full square neighborhoods (e.g., 2x2 neighborhoods, 3x3 neighborhoods, 5x5 neighborhoods). Except for the 2x2 neighborhood, only twelve comparisons are needed to determine the maximum and minimum chroma values of a neighborhood, regardless of the size of the neighborhood. In the case of the 2x2 neighborhood, only three comparisons are needed. If this recursive algorithm is used, the size of memory needed to buffer the lines is equal to twice the size of the lateral kernel window.

The present invention is not limited to the specific embodiments described and illustrated above. Instead, the invention is construed according to the claims that follow.

## Claims

1. A method of reducing chromatic bleeding artifacts in a digital image, the method comprising the steps of:

   modifying chrominance values of at least some pixels in the digital image according to their luminance value (Y) and chromatic dynamic range (D) comprising the steps of:

   calculating chroma values (C) for each pixel based on the pixel's chrominance values, determining for each pixel a chromatic dynamic range, wherein the chromatic dynamic range for each pixel is a function of minimum and maximum chroma values of a local pixel neighbourhood, modifying the pixel's chroma value from an original chroma value (C) to a modified chroma value (C') in accordance with the equation $C'=C - f(Y,D)\cdot(C-C_0)$, where C' is the new chroma value of the pixel, C is the original chroma value of the pixel, Y is the luminance value of the pixel, D is the chromatic dynamic range, $C_0$ is a chromatic modulus having a value between zero and $C_m$, $C_m$ is the minimum chroma of the local neighborhood for the pixel, and $f(Y,D)$ is a parametric expression that determines the amount of relative chroma reduction, and complies with $f(Y,D)\rightarrow1$ for $Y\rightarrow1$; and $f(Y,D)\rightarrow0$ for $D\rightarrow0$; and modifying the pixels' chrominance values by scaling them according to the modified chroma values.

2. A method as in claim 1, wherein the chrominance values of a pixel are scaled by the ratio C'/C if the original chroma value (C) of the pixel is modified, where C' is the new chroma value.

3. A method as in claim 1 or 2, wherein one or more of the following apply:

(a) $C_0=\max[C_m-D,0]$;
(b) the modulus $C_0=C_m$;
(c) $C_0=0$; and

(d) $$f(Y,D)=\max\left[1-\alpha\left(\frac{1-Y}{D}\right),0\right],$$

where $\alpha$ is a positive term.

4. A method as in claim 3, wherein when (d) applies $C'=C$ if $Y<(1-D/\alpha)$.

5. A method as in any preceding claim wherein $f(Y,D)\to 0$ for $D\to 0$ and $Y\to 1$.

6. A method as in claim 1, comprising leaving the pixel unmodified if the chromatic dynamic range is less than a predetermined threshold.

7. A method as in claim 1, wherein the digital image is reconstructed from subsampled chrominance values; and wherein the chromatic dynamic range is determined from subsampled chrominance values.

8. Apparatus for reducing chromatic bleeding artifacts in a digital image, the apparatus comprising a processor operable to modify chrominance values of at least some pixels in the digital image according to their luminance value (Y) and chromatic dynamic range (D), the processor being operable to:

calculate chroma values (C) for each pixel based on the pixel's chrominance values,
determine for each pixel a chromatic dynamic range, wherein the chromatic dynamic range for each pixel is a function of minimum and maximum chroma values of a local pixel neighbourhood,
modify the pixel's chroma value from an original chroma value (C) to a modified chrome value (C') in accordance with the equation $C'=C - f(Y,D)\cdot(C-C_0)$, where C' is the new chroma value of the pixel, C is the original chroma value of the pixel, Y is the luminance value of the pixel, D is the chromatic dynamic range, $C_0$ is a chromatic modulus having a value between zero and $C_m$, $C_m$ is the minimum chroma of the local neighborhood for the pixel, and $f(Y,D)$ is a parametric expression that determines the amount of relative chroma reduction, and complies with $f(Y,D)\to 1$ for $Y\to 1$; and $f(Y,D)\to 0$ for $D\to 0$; and
modify the pixels' chrominance values by scaling them accordingly to the modified chroma values.

9. Apparatus as in claim 8, wherein the processor is operable to scale the chrominance values of a pixel by the ratio C'/C if the original chroma value (C) of the pixel is modified, where C' is the new chroma value.

10. Apparatus as in claim 8 or 9, wherein one or more of the following applies:

(a) $C_0=\max[C_m-D,0]$;
(b) the modulus Co=Cm;
(c) $C_0=0$; and

(d) $$f(Y,D)=\max\left[1-\alpha\left(\frac{1-Y}{D}\right),0\right],$$

where $\alpha$ is a positive term.

11. Apparatus as in claim 10, wherein when (d) applies $C'=C$ if $Y<(1-D/\alpha)$.

12. Apparatus as in any of claims 8 to 11, wherein $f(Y, D)$ also complies with $f(Y, D)\to 0$ for $D\to 0$ and $Y\to 1$.

**Patentansprüche**

1. Ein Verfahren zur Verringerung ausblutender Farbartefakte in einem digitalen Bild, wobei das Verfahren die folgenden Schritte umfasst:

Modifizieren von Chrominanzwerten mindestens einiger Pixel in dem digitalen Bild gemäß ihrem Luminanzwert (Y) und dynamischem Farbbereich (D), umfassend die folgenden Schritte:

Berechnen von Chromawerten (C) für jedes Pixel basierend auf den Chrominanzwerten des Pixels,
Bestimmen für jedes Pixel eines dynamischen Farbbereiches, wobei der dynamische Farbbereich für jedes Pixel eine Funktion von minimalen und maximalen Chromawerten einer örtlichen Pixel-Umgebung ist,
Modifizieren des Chromawertes des Pixels von einem ursprünglichen Chromawert (C) in einen modifizierten Chromawert (C') gemäß der Gleichung $C' = C - f(Y,D)(C - C_0)$, worin C' der neue Chromawert des Pixels ist, C der ursprüngliche Chromawert des Pixels ist, Y der Luminanzwert des Pixels ist, D der dynamische Farbbereich ist, $C_0$ ein Farbmodul mit einem Wert zwischen Null

und $C_m$ ist, $C_m$ die minimale Chroma der örtlichen Umgebung für das Pixel ist, und f (Y, D) ein parametrischer Ausdruck ist, der die Höhe der relativen Chroma-Verringerung bestimmt und f(Y,D)→1 für Y→1; und f(Y,D)→0 für D→0 erfüllt; und Modifizieren der Chrominanzwerte der Pixel, indem sie gemäß der modifizierten Chromawerte skaliert werden.

**2.** Ein Verfahren nach Anspruch 1, wobei die Chrominanzwerte eines Pixels mit dem Verhältnis C'/C skaliert werden, falls der ursprüngliche Chromawert (C) des Pixels modifiziert ist, worin C' der neue Chromawert ist.

**3.** Ein Verfahren nach Anspruch 1 oder 2, wobei eines oder mehr als eines aus dem folgenden gilt:

(a) Co = max[$C_m$ - D,0];
(b) der Modul $C_0$ = Cm;
(c) $C_0$ = 0; und

(d) $\quad f(Y,D) = \max \left[ 1 - \alpha \left( \frac{1-Y}{D} \right), 0 \right],$

worin $\alpha$ ein positiver Term ist.

**4.** Ein Verfahren nach Anspruch 3, wobei, wenn (d) gilt, C' = C ist, falls Y < (1 - D/$\alpha$) ist.

**5.** Ein Verfahren nach einem vorstehenden Anspruch, wobei f(Y,D)→0 für D→0 und Y→1 geht.

**6.** Ein Verfahren nach Anspruch 1, umfassend das unmodifiziert Belassen des Pixels, falls der dynamische Farbbereich weniger als ein vorbestimmter Grenzwert beträgt.

**7.** Ein Verfahren nach Anspruch 1, wobei das digitale Bild aus teilgesampelten (subsampled) Chrominanzwerten rekonstruiert wird; und wobei der dynamische Farbbereich aus teilgesampelten (subsampled) Chrominanzwerten bestimmt wird.

**8.** Apparat zur Verringerung ausblutender Farbartefakte in einem digitalen Bild, wobei der Apparat einen Prozessor umfasst, der operabel ist, Chrominanzwerte mindestens einiger Pixel in dem digitalen Bild gemäß ihrem Luminanzwert (Y) und dynamischem Farbbereich (D) zu modifizieren, wobei der Prozessor für folgendes operabel ist:

Chromawerte (C) für jedes Pixel basierend auf den Chrominanzwerten des Pixels zu berechnen,
für jedes Pixel einen dynamischen Farbbereich zu bestimmen, wobei der dynamische Farbbereich für jedes Pixel eine Funktion von minimalen und maximalen Chromawerten einer örtlichen Pixel-Umgebung ist,
den Chromawert des Pixels von einem ursprünglichen Chromawert (C) in einen modifizierten Chromawert (C') gemäß der Gleichung C' = C - f(Y,D)(C - $C_0$) zu modifizieren, worin C' der neue Chromawert des Pixels ist, C der ursprüngliche Chromawert des Pixels ist, Y der Luminanzwert des Pixels ist, D der dynamische Farbbereich ist, $C_0$ ein Farbmodul mit einem Wert zwischen Null und $C_m$ ist, $C_m$ die minimale Chroma der örtlichen Umgebung für das Pixel ist, und f(Y,D) ein parametrischer Ausdruck ist, der die Höhe der relativen Chroma-Verringerung bestimmt und f(Y,D)→1 für Y→1; und f(Y, D)→0 für D→0 erfüllt; und
die Chrominanzwerte der Pixel zu modifizieren, indem sie gemäß der modifizierten Chromawerte skaliert werden.

**9.** Apparat nach Anspruch 8, wobei der Prozessor operabel ist, die Chrominanzwerte eines Pixels mit dem Verhältnis C'/C zu skalieren, falls der ursprüngliche Chromawert (C) des Pixels modifiziert ist, worin C' der neue Chromawert ist.

**10.** Apparat nach Anspruch 8 oder 9, wobei eines oder mehr als eines aus dem folgenden gilt:

(a) $C_0$ = max[$C_m$ - D,0];
(b) der Modul $C_0$ = Cm;
(c) $C_0$ = 0; und

(d) $\quad f(Y,D) = \max \left[ 1 - \alpha \left( \frac{1-Y}{D} \right), 0 \right],$

worin $\alpha$ ein positiver Term ist.

**11.** Apparat nach Anspruch 10, wobei, wenn (d) gilt, C' = C ist, falls Y < (1 - D/$\alpha$) ist.

**12.** Apparat nach einem der Ansprüche 8 bis 11, wobei f(Y,D) ferner f(Y,D)→0 für D→0 und Y→1 erfüllt.

**Revendications**

**1.** Procédé de réduction d'artefacts de diffusion chromatiques dans une image numérique, le procédé comprenant les étapes de :

- Modification de valeurs de chrominance d'au moins certains pixels dans l'image numérique conformément à leur valeur de luminance (Y) et à leur gamme dynamique chromatique (D) comprenant les étapes de :
- calcul de valeurs de chroma (C) pour chaque pixel sur la base des valeurs de chrominance du pixel,

- détermination pour chaque pixel d'une gamme dynamique chromatique, la gamme dynamique chromatique pour chaque pixel étant une fonction de valeurs de chroma minimale et maximale d'un voisinage local du pixel,

- modification de la valeur de chroma du pixel d'une valeur de chroma initiale (C) à une valeur de chroma modifiée (C') conformément à l'équation $C' = C - f(Y,D) \cdot (C-C_0)$, où C' est la nouvelle valeur de chroma du pixel, C est la valeur de chroma initiale du pixel, Y est la valeur de luminance du pixel, D est la gamme dynamique chromatique, $C_0$ est un module chromatique ayant une valeur comprise entre zéro et $C_m$, $C_m$ est la chroma minimale du voisinage local pour le pixel, et $f(Y,D)$ est une expression paramétrique qui détermine la quantité de réduction de chroma relative, et satisfait $f(Y, D) \rightarrow 1$ pour $Y \rightarrow 1$ ; et $f(Y, D) \rightarrow 0$ pour $D \rightarrow 0$ ; et

- modication des valeurs de chrominance des pixels par leur mise à l'échelle conformément aux valeurs de chroma modifiées.

2. Procédé selon la revendication 1, dans lequel les valeurs de chrominance d'un pixel sont mises à l'échelle par le rapport C'/C si la valeur de chroma initiale (C) du pixel est modifiée, où C' est la nouvelle valeur de chroma.

3. Procédé selon la revendication 1 ou 2, dans lequel un ou plusieurs ce qui suit s'appliquent :

   (a) $C_0 = \max[C_m - D, 0]$ ;
   (b) le module $C_0 = C_m$ ;
   (c) $C_0 = 0$ ; et

   (d)

$$f(Y, D) = \max\left[1 - \alpha\left(\frac{1-Y}{D}\right), 0\right],$$

   où $\alpha$ est un terme positif.

4. Procédé selon la revendication 3, dans lequel, lorsque (d) s'applique, C' = C si $Y < (1-D/\alpha)$.

5. Procédé selon l'une quelconque des revendications précédentes, dans lequel $f(Y,D) \rightarrow 0$ pour $D \rightarrow 0$ et $Y \rightarrow 1$.

6. Procédé selon la revendication 1, comprenant le fait de laisser le pixel non modifié si la gamme dynamique chromatique est inférieure à un seuil prédéterminé.

7. Procédé selon la revendication 1, dans lequel l'image numérique est reconstruite à partir de valeurs de chrominance sous-échantillonnées ; et dans lequel la gamme dynamique chromatique est déterminée à partir de valeurs de chrominance sous-échantillonnées.

8. Appareil de réduction d'artefacts de diffusion chromatiques dans une image numérique, l'appareil comprenant un processeur actionnable pour modifier des valeurs de chrominance d'au moins certains pixels dans l'image numérique conformément à leur valeur de luminance (Y) et à leur gamme dynamique chromatique (D), le processeur étant actionnable pour:

   - calculer des valeurs de chrominance (C) pour chaque pixel sur la base des valeurs de chrominance du pixel,
   - déterminer pour chaque pixel une gamme dynamique chromatique, la gamme dynamique chromatique pour chaque pixel étant une fonction de valeurs de chroma minimale et maximale d'un voisinage local du pixel,
   - modifier la valeur de chroma du pixel d'une valeur de chroma initiale (C) à une valeur de chroma modifiée (C') conformément à l'équation $C' = C - f(Y, D) \cdot (C-C_0)$, où C' est la nouvelle valeur de chroma du pixel, C est la valeur de chroma initiale du pixel, Y est la valeur de luminance du pixel, D est la gamme dynamique chromatique, $C_0$ est un module chromatique ayant une valeur comprise entre zéro et $C_m$, $C_m$ est la chrominance minimale du voisinage local pour le pixel, et $f(Y,D)$ est une expression paramétrique qui détermine la quantité de réduction de chroma relative, et satisfait $f(Y, D) \rightarrow 1$ pour $Y \rightarrow 1$ ; et $f(Y, D) \rightarrow 0$ pour $D \rightarrow 0$ ; et
   - modifier des valeurs de chrominance des pixels par leur mise à l'échelle conformément aux valeurs de chroma modifiées.

9. Appareil selon la revendication 8, dans lequel le processeur est actionnable pour mettre à l'échelle les valeurs de chrominance d'un pixel par le rapport C'/C si la valeur de chroma initiale (C) du pixel est modifiée, où C' est la nouvelle valeur de chroma.

10. Appareil selon la revendication 8 ou 9, dans lequel un ou plusieurs de ce qui suit s'appliquent :

   (a) $C_0 = \max[C_m - D, 0]$ ;
   (b) le module $C_0 = C_m$ ;
   (c) $C_0 = 0$ ; et

(d) $\quad f(Y,D) = \max\left[1-\alpha\left(\dfrac{\phantom{X}}{D}\right),0\right],$

où $\alpha$ est un terme positif.

11. Appareil selon la revendication 10, dans lequel, lorsque (d) s'applique, C' = C si $Y < (1-D/\alpha)$.

12. Appareil selon l'une quelconque des revendications 8 à 11, dans lequel $f(Y, D)$ satisfait également $f(Y, D)\to 0$ pour $D\to 0$ et $Y\to 1$.

# FIG. 1

```
ACCESS COMPRESSED LUMINANCE     ⌒ 102
AND CHROMINANCE VALUES
```

↓

```
RECONSTRUCT THE LUMINANCE       ⌒ 104
CHANNEL
```

↓

```
RECONSTRUCT THE CHROMINANCE     ⌒ 106
CHANNELS
```

↓

```
INTERPOLATE THE CHROMINANCE     ⌒ 108
CHANNELS
```

↓

```
MODIFY PIXEL CHROMA VALUES
WITH RESPECT TO LUMINANCE        ⌒ 110
VALUES AND LOCAL CHROMATIC
DYNAMIC RANGE
```

↓

```
SCALE CHROMINANCE VALUES OF      ⌒ 112
·MODIFIED PIXELS
```

# FIG. 2

# FIG. 4

COMPUTER

216 — PROCESSOR

MEMORY

212 — PROGRAM

212

# FIG. 3a    FIG. 3b    FIG. 3c    FIG. 3d

**FIG. 3a**

| C1 | C1 | C2 | C2 |
|----|----|----|----|
| C1 | C1 | C2 | C2 |
| C3 | C3 | C4 | C4 |
| C3 | C3 | C4 | C4 |

**FIG. 3b**

| C1 | C1 | C2 | C2 |
|----|----|----|----|
| C1 | C1 | C2 | C2 |
| C3 | C3 | C4 | C4 |
| C3 | C3 | C4 | C4 |

**FIG. 3c**

| C1 | C1 | C2 | C2 |
|----|----|----|----|
| C1 | C1 | C2 | C2 |
| C3 | C3 | C4 | C4 |
| C3 | C3 | C4 | C4 |

**FIG. 3d**

| C1 | C1 | C2 | C2 |
|----|----|----|----|
| C1 | C1 | C2 | C2 |
| C3 | C3 | C4 | C4 |
| C3 | C3 | C4 | C4 |

$C_m = min(C1, C2, C3, C4); C_M = max(C1, C2, C3, C4)$

EP 1 436 980 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6031581 A

- EP 0929189 A

**Non-patent literature cited in the description**

- A survey of hybrid MC/DPCM/DCT video coding distortions. **YUEN M et al.** Signal Processing. European Journal Devoted to the Methods and Applications of Signal Processing. Elsevier Science Publishers, 30 November 1998, vol. 70, 247-278